# EUROPEAN PATENT APPLICATION

(11) **EP 4 748 904 A1**
(43) Date of publication of application: **27.05.2026**
(21) Application number: 24843119.9
(22) Date of filing: 16.07.2024
(51) Int. Cl.: C09K 17/32, C09K 17/02, C09K 17/42

(54) **SOIL CONDITIONER COMPOSITION CONTAINING CELLULOSE-DERIVATIVE-CARRYING PARTICLES**

(30) Priority: 19.07.2023 JP 2023117706
(71) Applicant: Kao Corporation, Tokyo 103-8210 (JP)
(72) Inventor: SUZURI, Yumi, Tokyo 103-8210 (JP); YASUI, Ryosuke, Tokyo 103-8210 (JP); OKONOGI, Akinori, Tokyo 103-8210 (JP); YAMAMOTO, Shota, Tokyo 103-8210 (JP)
(74) Representative: Hoffmann Eitle
(86) International application number: PCT/JP2024/025455
(87) International publication number: WO 2025/018329

(57) **Abstract**

Provided is a soil improving agent composition containing cellulose derivative-bearing particles in which water-insoluble particles (component (A)) bear particles of a cellulose derivative (component (B)) on their surface.

## Description

### Field of the Invention

The present invention relates to a soil improving agent composition containing cellulose derivative-bearing particles.

### Background of the Invention

Cellulose derivatives such as carboxymethyl cellulose (CMC) or the like are applied in various fields for their water absorbency. For example, JP-A 2004-236530 discloses potting soil comprising a water-soluble cellulose derivative in an amount of 0.0001 to 0.5 parts by weight relative to 100 parts by weight of soil. JP-A 2000-271597 discloses a sludge treatment agent comprising an inorganic powder in an amount of 5 to 2000 parts by weight relative to 100 parts by weight of an alkali metal salt of carboxymethyl cellulose. Further, JP-A 2002-363562 discloses a granular water retention agent for soil improvement comprising a base material and water-soluble cellulose ether. Further, JP-A 2002-556613 discloses a mixture of a carrier and additives for use in germinating units comprising one or more substances consisting of supporting granular expanded vermiculite, perlite, zeolite, wood fibres, cellulose materials, or mineral fibres, and further comprising one or more water-absorbing substances such as a superabsorbing polymer (SAP) or CMC and others. Further, JP-A 2016-052659 discloses a granular treatment agent for treating manure, organic sludge, plants and animals, livestock, livestock barns, or soil, the agent comprising binder granules containing slaked lime or limestone and a binder, and a water-absorbing polymer such as a cellulose-based polymer or the like.

### Summary of the Invention

Cellulose derivatives like CMC are known to impart high drainage to soil when sprayed on the soil. However, since cellulose derivatives are often sprayed on soil outdoors in general, they are scattered by wind and cannot always be sprayed efficiently. Accordingly, there is a demand for techniques that can achieve high drainage using cellulose derivatives while suppressing the scattering of cellulose derivatives.

Diligent research to address the above problem has consequently revealed that using cellulose derivative-bearing particles in which water-insoluble particles (component (A)) bear particles of a cellulose derivative (component (B)) on their surface results in improved soil drainage and excellent scattering suppressibility of the cellulose derivative-bearing particles.

In other words, the present invention relates to a soil improving agent composition containing cellulose derivative-bearing particles in which water-insoluble particles (component (A)) bear particles of a cellulose derivative (component (B)) on their surface. Further, the present invention relates to a method for improving soil using the soil improving agent composition containing the cellulose derivative-bearing particles.

Using the soil improving agent composition containing the cellulose derivative-bearing particles of the present invention makes it possible to achieve excellent drainage using cellulose derivatives while suppressing the scattering of cellulose derivatives.

### Brief Description of the Drawings

[FIG. 1] A 100x microscopic image of silica sand bearing a cellulose derivative on its surface.
[FIG. 2] A 50x microscopic image of silica sand of component (A).
[FIG. 3] A 50x microscopic image of carboxymethyl cellulose of component (B).

### Embodiments of the Invention

The soil improving agent composition of the present invention (hereinafter referred to as the composition of the present invention) contains cellulose derivative-bearing particles (hereinafter referred to as the bearing particles) in which water-insoluble particles (component (A)) bear particles of a cellulose derivative (component (B)) on their surface.

Note that, in the present invention, soil improvement means improving soil drainage. Further, enhanced aggregate formation in soil, improved gaseous phase ratios of soil, and reduced soil hardness can be expected.

In crop cultivation fields, soil properties are a critical factor from the viewpoint of productivity or the like. In particular, poor drainage in fields is known to cause reduced crop yields due to waterlogging damage (Bulletin of Crop Science Society of Japan, Crop Science Society of Japan, 2011, Vol. 80, No. 1, pp. 65-72). Various forms of soil improving agents have been proposed to improve the drainage. However, in recent years, there has been a growing demand for more economical and easy-to-use soil improving agents.

In the present invention, it appears that a cellulose derivative is not scattered when sprayed on soil, thus effectively adhering to the soil, and this results in the formation of aggregates and improved soil drainage. In particular, it appears that the cellulose derivative uniformly covers the soil because it gels upon contact with water. This seems to maintain the aggregates, enabling improved drainage and reduced soil hardness. Accordingly, covering with the cellulose derivative appears to suppress soil agglomeration even if the soil is dried.

Hereinafter, "soil drainage" is also simply described as "drainage." Further, the "scattering of the particles of a cellulose derivative (component (B))" is also simply described as "scattering." Further, suppressibility of the "scattering" is also simply described as "scattering suppressibility."

First, the bearing particles, components (A) and (B) used for the production of the bearing particles, and the definition of the average particle size of the composition and a method for measuring the same in the present invention are explained.

In the present invention, the average particle sizes of particles are measured using sieves. Specifically, the average particle sizes of the bearing particles, component (A), and the composition are weight average values each calculated using (i-a) 3000 µm, (ii-a) 1500 µm, (iii-a) 712.5 µm, (iv-a) 337.5 µm, (v-a) 175 µm, and (vi-a) 50 µm as the respective representative particle size values of six groups of particles of (i-a) 2000 µm or more, (ii-a) 1000 µm or more and less than 2000 µm, (iii-a) 425 µm or more and less than 1000 µm, (iv-a) 250 µm or more and less than 425 µm, (v-a) 100 µm or more and less than 250 µm, and (vi-a) less than 100 µm into which the particles are separated using five types of sieves with a mesh size of 100 µm, 250 µm, 425 µm, 1000 µm, and 2000 µm.

The average particle size of component (B) is a weight average value calculated using (i-b) 500 µm, (ii-b) 337.5 µm, (iii-b) 175 µm, (iv-b) 87.5 µm, (v-b) 60 µm, (vi-b) 32.5 µm, and (vii-b) 10 µm as the respective representative particle size values of seven groups of particles of (i-b) 425 µm or more, (ii-b) 250 µm or more and less than 425 µm, (iii-b) 100 µm or more and less than 250 µm, (iv-b) 75 µm or more and less than 100 µm, (v-b) 45 µm or more and less than 75 µm, (vi-b) 20 µm or more and less than 45 µm, and (vii-b) less than 20 µm into which the particles are separated using six types of sieves with a mesh size of 20 µm, 45 µm, 75 µm, 100 µm, 250 µm, and 425 µm.

Further, the term "particle size distribution" as used herein refers to distributions resulting from the classification by the methods described above.

The bearing particles in the present invention have an average particle size of preferably 200 µm or more, more preferably 250 µm or more, and further preferably 300 µm or more, and preferably 1000 µm or less, more preferably 700 µm or less, and further preferably 600 µm or less from the viewpoint of achieving improved drainage and scattering suppressibility.

Improved scattering suppressibility is achieved when the amount of bearing particles with a particle size of less than 250 µm is less than 50 mass% in the bearing particles. Further, improved drainage is achieved when the amount of bearing particles with a particle size of 1000 µm or more is less than 30 mass%.

Note that the bearing particles with a particle size of less than 250 µm refers to bearing particles passing through a sieve with a mesh size of 250 µm. Further, the bearing particles with a particle size of 1000 µm or more refers to bearing particles not passing through a sieve with a mesh size of 1000 µm.

An amount of component (B) in the bearing particles in the present invention is preferably 1 part by mass or more, more preferably 3 parts by mass or more, and further preferably 10 parts by mass or more, and preferably 100 parts by mass or less, more preferably 70 parts by mass or less, and further preferably 50 parts by mass or less relative to 100 parts by mass of component (A) from the viewpoint of achieving improved drainage.

The insoluble particles of component (A), which is a constituent component of the bearing particles in the present invention as described later, have an average particle size of preferably 180 µm or more, more preferably 200 µm or more, and further preferably 250 µm or more, and preferably 1000 µm or less, more preferably 650 µm or less, and further preferably 350 µm or less.

Further, component (B) has an average particle size of preferably 10 µm or more and more preferably 20 µm or more, and preferably 200 µm or less and more preferably 100 µm or less.

Therefore, the obtained bearing particles are preferably those in which component (A) with a larger particle size bears component (B) with a smaller particle size on its surface.

Further, particles other than component (B) may be carried on the surface of component (A), but a content of the particles of component (B) in the carried particles is preferably 70 mass% or more and more preferably 90 mass% or more, and preferably 100 mass% or less from the viewpoint of achieving improved drainage and scattering suppressibility.

The water-insoluble particles of component (A) have a bulk density of preferably 0.5 g/cm³ or more, more preferably 0.8 g/cm³ or more, and further preferably 1.0 g/cm³ or more from the viewpoint of achieving improved scattering suppressibility. Excellent scattering suppressibility is achieved when component (A) has such a bulk density.

Further, the water-insoluble particles of component (A) have a bulk density of preferably 1.5 g/cm³ or less, more preferably 1.4 g/cm³ or less, further preferably 1.35 g/cm³ or less, and furthermore preferably 1.3 g/cm³ or less from the viewpoint of drainage.

Specifically, plant-based materials such as palm kernel shells, peat moss, bagasse, rice husks, sawdust, and others, non-porous inorganic materials such as silica sand, sea sand, alumina sand, talc, bentonite, calcium carbonate, and others, and porous inorganic materials such as vermiculite, attapulgite, diatomaceous earth, zeolite, perlite, and others can be used as the water-insoluble particles of component (A).

Among these, palm kernel shells are preferable as a plant-based material, zeolite is preferable as a porous inorganic material, and at least one selected from silica sand, sea sand, alumina sand, talc, bentonite, and calcium carbonate is preferable as a non-porous inorganic material. In terms of moderate bulk density and excellent scattering suppressibility and in terms of low water absorbency and excellent drainage, a non-porous inorganic material is preferable, and silica sand or calcium carbonate is more preferable.

The insoluble particles of raw material component (A) have an average particle size of preferably 180 µm or more, more preferably 200 µm or more, and further preferably 250 µm or more, and preferably 1000 µm or less, more preferably 650 µm or less, and further preferably 350 µm or less from the viewpoint of obtaining bearing particles with excellent drainage and scattering suppressibility.

Improved scattering suppressibility is achieved when the amount of particles with a particle size of less than 250 µm is less than 50 mass% in the particles of component (A). Further, improved drainage is achieved when the amount of particles with a particle size of 1000 µm or more is less than 50 mass%.

Note that the particles with a particle size of less than 250 µm refers to those passing through a sieve with a mesh size of 250 µm. Further, the particles with a particle size of 1000 µm or more refers to those not passing through a sieve with a mesh size of 1000 µm.

A ratio of the average particle size of the bearing particles to that of component (A), [average particle size of bearing particles]/[average particle size of component (A)], is preferably 1.0 or more, more preferably 1.3 or more, and further preferably 1.4 or more, and preferably 3.0 or less and more preferably 2.5 or less from the viewpoint of achieving improved drainage.

The value of [average particle size of bearing particles]/[average particle size of component (A)] can be determined, for example, as follows. Since the average particle size of used component (A) is larger than that of component (B) as described above, most particles with sizes equal to or smaller than the largest particle size of raw material component (B) sifted from the composition may be considered as component (B) not carried. Accordingly, the value can be determined by calculating the average particle size of the bearing particles obtained by taking away the particles with sizes equal to or smaller than the largest particle size of component (B), and dividing this by the average particle size of component (A) used as a raw material.

Further, the value can also be determined as follows. The cellulose derivative is dissolved from the obtained bearing particles using a solvent, such as water or the like, in an amount 1000 times the amount of the carried cellulose derivative, and centrifugation and washing are thereafter performed. After that, the average particle size of freeze-dried component (A) is measured using sieves, and the average particle size of the bearing particles is divided by the average particle size of the remaining component (A) to determine the value.

Examples of the cellulose derivative constituting the particles of a cellulose derivative of component (B) can include the following cellulose derivatives:
(B-1) a carboxyalkyl cellulose or a salt thereof in which part or all of the hydrogens in the hydroxyl groups of cellulose have been substituted by a carboxyalkyl group, for example, a carboxyalkyl cellulose or a salt thereof (here, the salt is a sodium salt, a potassium salt, a calcium salt, an ammonium salt, or the like) having a group in which a carboxy group is bonded to an alkyl group with 1 or more and 4 or less carbons, such as carboxymethyl cellulose or a salt thereof, carboxyethyl cellulose or a salt thereof, or the like;
(B-2) a (carboxyalkyl) alkyl cellulose or a salt thereof in which part or all of the hydrogens in the hydroxyl groups of cellulose have been substituted by a carboxyalkyl group and an alkyl group, for example, a (carboxyalkyl) alkyl cellulose or a salt thereof (here, the salt is a sodium salt, a potassium salt, a calcium salt, an ammonium salt, or the like) having a group in which a carboxy group is bonded to an alkyl group with 1 or more and 4 or less carbons, and an alkyl group with 1 or more and 4 or less carbons, such as (carboxymethyl) methyl cellulose or a salt thereof, (carboxymethyl) ethyl cellulose or a salt thereof, or the like;
(B-3) an alkyl cellulose in which part or all of the hydrogens in the hydroxyl groups of cellulose have been substituted by an alkyl group, for example, an alkyl cellulose having an alkyl group with 1 or more and 4 or less carbons, such as methyl cellulose, ethyl cellulose, or the like;
(B-4) a hydroxyalkyl cellulose in which part or all of the hydrogens in the hydroxyl groups of cellulose have been substituted by a hydroxyalkyl group, for example, a hydroxyalkyl cellulose having a hydroxyalkyl group with 2 or more and 4 or less carbons, such as hydroxyethyl cellulose, hydroxypropyl cellulose, or the like; and
(B-5) an (alkyl) hydroxyalkyl cellulose in which part or all of the hydrogens in the hydroxyl groups of cellulose have been substituted by an alkyl group and a hydroxyalkyl group, for example, an (alkyl) hydroxyalkyl cellulose having an alkyl group with 1 or more and 4 or less carbons and a hydroxyalkyl group with 2 or more and 4 or less carbons, such as (hydroxyethyl) methyl cellulose, (hydroxyethyl) ethyl cellulose, (hydroxypropyl) methyl cellulose, (hydroxypropyl) ethyl cellulose, or the like.

The cellulose derivative of component (B) is preferably a carboxyalkyl cellulose or a salt thereof of (B-1) from the viewpoint of achieving improved drainage. Especially, carboxymethyl cellulose or a salt thereof is preferable. The carboxy group may be an alkali metal salt such as a sodium salt, a potassium salt, or the like, an alkaline earth metal salt such as a magnesium salt, a calcium salt, or the like, or an ammonium ion salt. Among these, an alkali metal salt is preferable and a sodium salt is more preferable.

The cellulose derivative constituting component (B) is a derivative in which part or all of the hydrogens in the hydroxyl groups of cellulose have been substituted. The degree of substitution is defined as an indicator that shows the degree to which hydrogen in the three hydroxyl groups contained in a glucose unit of cellulose has been substituted. For example, the degree of substitution is 1 when hydrogen in an average of one hydroxyl group of the three has been substituted, and the degree of substitution is 3 when hydrogen in all three has been substituted. The degree of substitution can be calculated, for example, by determining the integral value of the peak for the protons or carbon of the unsubstituted methylene and that of the peak for the protons or carbon in a substituent in a glucose unit by a ¹H or ¹³C-NMR measurement.

The degree of substitution is preferably 0.3 or more, more preferably 0.6 or more, and further preferably 1.0 or more, and preferably 1.8 or less and more preferably 1.6 or less from the viewpoint of achieving improved drainage.

The cellulose derivative of component (B) has a viscosity of preferably 5 mPa·s or more, more preferably 15 mPa·s or more, and further preferably 100 mPa·s or more, and preferably 5000 mPa·s or less, more preferably 4000 mPa·s or less, and further preferably 3500 mPa·s or less from the viewpoint of achieving improved drainage.

The cellulose derivative of component (B) may be either in particle form, fiber form, film form, or the like, but is more preferably in particle form from the viewpoint of being easily carried on the surface of component (A). In other words, component (B) is preferably particles of the cellulose derivative.

When particles of the cellulose derivative are used as component (B), the particles have an average particle size of preferably 10 µm or more and more preferably 20 µm or more, and preferably 200 µm or less and more preferably 100 µm or less.

Further, improved drainage is achieved by using the composition when the amount of particles with a particle size of 250 µm or more in component (B) is less than 50 mass%. Further, the bearing particles are easily prepared when the amount of particles of less than 20 µm is less than 20 mass%.

Note that the particles with a particle size of 250 µm or more refers to particles not passing through a sieve with a mesh size of 250 µm. Further, the particles with a particle size of less than 20 µm refers to particles passing through a sieve with a mesh size of 20 µm.

The average particle size of the bearing particles can be measured by removing component (B) not carried on the surface of component (A) during production. A method for measuring the same can be, for example, as follows. Since the average particle size of used component (A) is larger than that of component (B) as described above, most particles with sizes equal to or smaller than the largest particle size of component (B) resulting from sifting may be considered as component (B). Accordingly, most particles obtained by taking away the particles with sizes equal to or smaller than the largest particle size of component (B) may be considered as the bearing particles. The average particle size of those particles can be calculated as the average particle size of the bearing particles. The average particle size of the bearing particles obtained in this manner is almost the same or slightly larger, although it depends on the content of component (B) not carried on the surface of component (A).

A method for producing the bearing particles in the present invention is not particularly limited, and a general-purpose method such as a kneading method, an impregnation supporting method, an incipient wetness method, or the like can be used. A kneading method carried out in the presence of water is preferable in terms of high cellulose derivative-bearing efficiency.

The kneading method carried out in the presence of water can be performed, for example, by the following steps:
(step 1) a step of mixing the water-insoluble particles (component (A)) and water to obtain the water-insoluble particles with water adhering to their surface,
(step 2) a step of adding the particles of a cellulose derivative (component (B)) to the water-insoluble particles with water adhering to their surface obtained in step 1 and mixing, and
(step 3) a step of drying, while stirring as necessary, a water-containing mixture obtained in step 2 to obtain the composition containing the bearing particles in which the water-insoluble particles (component (A)) bear the particles of a cellulose derivative (component (B)) on their surface.

Further, the method can also include the following step as necessary:
(step 4) a step of stirring the mixture obtained in step 3 again to break up agglomerates of the bearing particles into smaller sizes.
Note that steps 3 and 4 may be performed concurrently.

The amount of water added in step 1 depends on the amount of component (B) relative to 100 parts by mass of used component (A) and thus is hard to generally determine, but component (B) is efficiently carried when water is added in an amount of, for example, 0.5 parts by mass or more and 30 parts by mass or less relative to 100 parts by mass of component (A). In other words, the bearing particles in which component (A) bears almost 100% of added component (B) on its surface and the amount of component (B) is 1 part by mass or more and 100 parts by mass or less relative to 100 parts by mass of component (A) are obtained by adding water in an amount of 0.5 parts by mass or more and 30 parts by mass or less relative to 100 parts by mass of component (A).

More specifically, the amount of added water is preferably 0.5 parts by mass or more and 15 parts by mass or less relative to 100 parts by mass of component (A) when component (A) is a non-porous inorganic material from the viewpoint of improved bearing of component (B) on component (A), and the amount of added water is preferably 10 parts by mass or more and 30 parts by mass or less relative to 100 parts by mass of component (A) when component (A) is a porous inorganic material because the porous inorganic material absorbs water.

In steps 1 to 4, mixing or stirring may be performed with a propeller stirrer such as a Henschel mixer, a ribbon mixer, or the like or a screw stirrer such as a Nauta mixer or the like, or on a stirrer using a magnetic stirring bar, but may also be performed by hand mixing. Further, a stirring time depends on the amount of used component (A) or (B), but may be 30 seconds or more.

The obtained composition and bearing particles may be dried as necessary. Drying can be carried out at 50°C or more and 150°C or less. Further, a drying time depends on the use amount of component (A), component (B), or water, but may be 1 minute or more. Further, the obtained composition or bearing particles may be stirred or the like as necessary to break up agglomerates into smaller sizes. A drying time depends on the use amount of component (A), component (B), or water, but may be 1 minute or more.

The composition of the present invention can contain a surfactant, a bactericide, a dispersant, a polymer, or the like in the composition as necessary. Moreover, the composition may further contain component (A).

Examples of the surfactant include one or more surfactants selected from a nonionic surfactant, an anionic surfactant, a cationic surfactant, and an amphoteric surfactant, and a nonionic surfactant is preferable. A content of these additives may be 0.001 mass% or more and 10 mass% or less in the composition of the present invention.

Further, the composition of the present invention may contain the cellulose derivative-bearing particles in which the water-insoluble particles (component (A)) bear the particles of a cellulose derivative (component (B)) on their surface in an amount of preferably 60 mass% or more, more preferably 70 mass% or more, further preferably 80 mass% or more, and furthermore preferably 90 mass% or more from the viewpoint of achieving improved scattering suppressibility and drainage.

A method for spraying the composition of the present invention is not particularly limited, and a hand-pushed sprayer, a lime spreader, a broadcast spreader, or the like can be used.

### <Method for improving soil>

The method for improving soil of the present invention is a method for improving soil that can be performed using the composition of the present invention and includes mixing the composition of the present application to the soil.

The soil to which the present invention is directed is preferably cultivated land used for growing plants or crops. The soil to which the present invention is directed can be applied as various types of soil, but is suitable as agricultural soil, especially field soil. In other words, the soil improving agent composition of the present invention is preferably for agricultural use and further for field use.

In the present invention, the composition of the present invention can be added to the soil by mixing the composition to the soil, spraying the composition on the soil, performing a combination of these, and other methods.

Examples of a specific method for adding component (A) and the composition of the present invention to the soil in a field include a method including cultivating the soil while spraying component (A) and the composition of the present invention using a sprayer and a cultivator or the like together.

In the present invention, the composition is added in an amount of preferably 0.001 parts by mass or more and more preferably 0.005 parts by mass or more, and preferably less than 10 parts by mass, more preferably 5 parts by mass or less, further preferably 2.5 parts by mass or less, furthermore preferably 2.0 parts by mass or less, furthermore preferably 1.0 parts by mass or less, and furthermore preferably 0.3 parts by mass or less per 100 parts by mass of the soil.

Further, an addition amount to the soil as the cellulose derivative of component (B) is preferably 0.0001 parts by mass or more and more preferably 0.0004 parts by mass or more, and preferably 0.95 parts by mass or less, more preferably 0.5 parts by mass or less, further preferably 0.05 parts by mass or less, and furthermore preferably 0.03 parts by mass or less per 100 parts by mass of the soil.

When the composition of the present invention is added to the soil, for example, by spraying, in the method for improving soil of the present invention, the composition is added in an amount of preferably 0.4 kg or more and more preferably 2 kg or more, and preferably 4,000 kg or less, more preferably 2,000 kg or less, further preferably 1,000 kg or less, furthermore preferably 800 kg or less, furthermore preferably 400 kg or less, and furthermore preferably 120 kg or less per 10 ares of the soil.

Further, an addition amount to the soil as the cellulose derivative is preferably 0.04 kg or more and more preferably 1.6 kg or more, and preferably 390 kg or less, more preferably 200 kg or less, further preferably 20 kg or less, and furthermore preferably 12 kg or less per 10 ares of the soil.

### Examples

The present invention is hereinafter illustrated in detail by giving examples and comparative examples, but the present invention is not limited by the description below.

The average particle sizes and particle size distributions of raw material components (A) and (B) and produced compositions and bearing particles were measured by the aforementioned methods using sieves. The used sieves are as indicated below.
Component (A) and bearing particles: model number 200 × 45 / 100 µm (mesh size 100 µm), model number 200 × 45 / 250 µm (mesh size 250 µm), model number 200 × 45 / 425 µm (mesh size 425 µm), model number 200 × 45 / 1 mm (mesh size 1000 µm), and model number 200 × 45 / 2 mm (mesh size 2000 µm) manufactured by SANPO
Component (B): New Perlon sieve φ200 (mesh size 20 µm) manufactured by Ito Seisakusho Co., Ltd., and model number 200 × 60 / 45 µm (mesh size 45 µm), model number 75 × 20 / 75 µm (mesh size 75 µm), model number 200 × 45 / 100 µm (mesh size 100 µm), model number 200 × 45 / 250 µm (mesh size 250 µm), and model number 200 × 45 / 425 µm (mesh size 425 µm) manufactured by SANPO

### <Production of cellulose derivative-bearing particles>

The components below were used as component (A).
(A1) silica sand 1: silica sand No. 7
(A2) silica sand 2: silica sand No. 6 from Yugen Kaisha Yamashita Kenzaiten
(A3) silica sand 3: silica sand No. 5 from Yugen Kaisha Yamashita Kenzaiten
(A4) silica sand 4: silica sand particles with a particle size of 100 µm or more and less than 250 µm collected by sifting silica sand No. 5 from Yugen Kaisha Yamashita Kenzaiten
(A5) silica sand 5: silica sand particles with a particle size of 1000 µm or more and less than 2000 µm collected by sifting silica sand No. 4 from Yugen Kaisha Yamashita Kenzaiten
(A6) silica sand 6: silica sand particles with a particle size of 425 µm or more and less than 1000 µm collected by sifting silica sand No. 5 from Yugen Kaisha Yamashita Kenzaiten
(A7) calcium carbonate 1: K-1 from Sankyo Seifun K.K.
(A8) calcium carbonate 2: K-3 from Sankyo Seifun K.K.
(A9) zeolite (abbreviated as ZE): NITTO ZEOLITE No. 1 from NITTO FUNKA KOGYO K.K.
(A10) palm kernel shells (abbreviated as PKS): from JAPAN PULP AND PAPER COMPANY LIMITED
(A11) diatomaceous earth: Radiolite #3000 from Showa Chemical Industry Co., Ltd.

Table 1 shows the particle size distributions, average particle sizes, and bulk densities of the components (A) listed above. The bulk densities were measured using a bulk density meter (JIS K 3362) manufactured by TSUTSUI RIKAGAKU KIKAI CO., LTD.

**[Table 1]**

| | Particle size distribution [mass%] | | | | | | Average particle size [µm] | Bulk density [g/cm³] |
|---|---|---|---|---|---|---|---|---|
| | 2000 µm or more | 1000-2000 µm | 425-1000 µm | 250-425 µm | 100-250 µm | Less than 100 µm | | |
| (A1) silica sand 1 | 0 | 0 | 0.1 | 58.2 | 41.8 | 0 | 270 | 1.22 |
| (A2) silica sand 2 | 0 | 0 | 1.7 | 72.2 | 26.1 | 0 | 302 | 1.26 |
| (A3) silica sand 3 | 0 | 0 | 71.7 | 18.5 | 9.8 | 0 | 590 | 1.34 |
| (A4) silica sand 4 | 0 | 0 | 0 | 0 | 100 | 0 | 175 | 1.14 |
| (A5) silica sand 5 | 0 | 100 | 0 | 0 | 0 | 0 | 1500 | 1.33 |
| (A6) silica sand 6 | 0 | 0 | 100 | 0 | 0 | 0 | 713 | 1.33 |
| (A7) Ca 1 | 0 | 0 | 0.3 | 69.4 | 30.3 | 0 | 290 | 1.34 |
| (A8) Ca 2 | 0 | 0.8 | 96.6 | 3.4 | 0.2 | 0 | 712 | 1.4 |
| (A9) ZE | 0 | 0 | 49.5 | 22.0 | 28.5 | 0 | 477 | 0.7 |
| (A10) PKS^{a)} | 0 | 25.0 | 25.0 | 25.0 | 25.0 | 0 | 681 | 0.7 |
| (A11) diatomaceous earth | 0 | 0.09 | 16.2 | 26.8 | 57.0 | 0 | 306 | 0.26 |

| | | | | | | | | |
|---|---|---|---|---|---|---|---|---|
| a) used by separating through sieves and thereafter mixing such that the content of the particles included in each particle size range was 25.0% | | | | | | | | |

Each particle size range of the particle size distributions in the table includes its lower limit and does not include its upper limit. For example, "100-250 µm" indicates "100 µm or more and less than 250 µm." The same also applies to the tables below.

The components below were used as component (B).
(B1) sodium carboxymethyl cellulose (hereinafter abbreviated as CMC) 1: CMC DAICEL 1390 from Daicel Miraizu Ltd.
(B2) CMC 2: CMC DAICEL 2260 from Daicel Miraizu Ltd.
(B3) CMC 3: F600MC from Nippon Paper Industries Co., Ltd.
(B4) CMC 4: SUNROSE B3B from Nippon Paper Industries Co., Ltd.
(B5) CMC 5: particles of 425 µm or less collected by sifting F300HG from Nippon Paper Industries Co., Ltd.
(B6) hydroxypropyl methylcellulose (abbreviated as HPMC): METOLOSE 65SH-15000 from Shin-Etsu Chemical Co., Ltd.
(B7) hydroxyethyl cellulose (abbreviated as HEC): HEC DAICEL SP9000 from Daicel Miraizu Ltd.
(B8) powdery cellulose (abbreviated as CEL): W-300G from Nippon Paper Industries Co., Ltd.
(B9) polyacrylamide, cross-linked acrylamide-acrylic acid copolymer (abbreviated as SAP): Super Absorbent Polymer (Acrylate Type) from FUJIFILM Wako Pure Chemical Corporation

Table 2 shows the particle size distributions, average particle sizes, viscosities, and degrees of substitution of the components (B) listed above.

The viscosities were measured at 25°C using a viscometer (TVB-10 manufactured by Toki Sangyo Co., Ltd.) by preparing a 1% aqueous solution of each component (B).

The degrees of substitution of (B1) to (B5) were measured by the method below.

In a 10-mL screw-top test tube, 0.1 g of CMC was placed, 1 mL of heavy water and 1 mL of heavy water/bisulfate = 1/1 were added, and stirring was carried out for 1 minute with a vortex mixer. The mixture was heated at 90°C for 2 hours and centrifuged. The supernatant was transferred to an NMR tube, and a ¹H-NMR measurement was performed. The integral value for one proton of the sugar skeleton and the integral value for two methylene protons of a carboxymethyl group were determined from the obtained spectrum, and the value obtained by dividing (integral value of methylene protons of carboxymethyl group/2) by that for one sugar skeleton proton was given as the degree of substitution.

### <Conditions of ¹H-NMR measurement>

Instrument: AVANCE NEO400N manufactured by Bruker
Magnetic field strength: 400 MHz
Number of accumulations: 128 times
Waiting time: 30 sec
Pulse width: 45°
Data point: 65536
Temperature: room temperature
Observation width: 8196 Hz

The degree of substitution of (B6) was measured by the method below.

In a beaker, 1 g of HPMC was placed, 30 mL of 65 wt% sulfuric acid was added, and stirring was thereafter carried out for 30 minutes at 20°C. 60 mL of ion-exchanged water was then added, and the reaction was thereafter carried out at 90°C for 2 hours. Neutralization was carried out with barium carbonate, and filtration and concentration were thereafter performed. 1 mL of heavy water was added to the obtained concentrated solution, and a ¹³C-NMR measurement was performed. The degree of substitution was calculated from carbon derived from a methyl group at carbon in position 1 of the cellulose skeleton and carbon of a methyl group derived from a hydroxypropoxy group.

### <Measurement conditions of ¹³C-NMR>

Instrument: Mercury 400BB manufactured by Varian
Magnetic field strength: 100 MHz
Number of accumulations: 5000 times
Waiting time: 1 sec
Pulse width: 45°
Data point: 65536
Temperature: room temperature
Observation width: 25188.9 Hz

**[Table 2]**

| | Particle size distribution [mass%] | | | | | | | Average particle size [µm] | Viscosity [mPa·s] | Degree of substitution |
|---|---|---|---|---|---|---|---|---|---|---|
| | 425 µm or more | 250-425 µm | 100-250 µm | 75-100 µm | 45-75 µm | 20-45 µm | Less than 20 µm | | | |
| (B1) CMC 1 | 0 | 0 | 0 | 17.4 | 40.1 | 41.5 | 0.95 | 62 | 3027 | 1.6 |
| (B2) CMC 2 | 0 | 0 | 0 | 56 | 23.2 | 20.9 | 0 | 70 | 1000 | 0.7 |
| (B3) CMC 3 | 0 | 0 | 0 | 1.6 | 70.0 | 28.5 | 0.2 | 55 | 4000 | 0.7 |
| (B4) CMC 4 | 0 | 0 | 0 | 83.8 | 9.0 | 6.8 | 0.5 | 85 | 10 | 0.52 |
| (B5) CMC 5 | 0 | 99.8 | 0.2 | 0 | 0 | 0 | 0 | 337 | 1452 | 0.97 |
| (B6) HPMC | 0 | 0 | 0 | 54.3 | 35.9 | 9.8 | 0 | 72 | 962 | MeO group: 1.9 |
| | | | | | | | | | | HOC₃H₆O group: 0.18 |
| (B7) HEC | 0 | 0 | 0 | 98.4 | 1.6 | 0 | 0 | 87 | 3537 | 1.3 |
| (B8) CEL | 0 | 0 | 0 | 72.7 | 12.8 | 14.5 | 0 | 76 | - | 0 |
| (B9) SAP | 0 | 0 | 0 | 54.6 | 28.6 | 16.6 | 0.3 | 73 | - | - |

The cellulose derivative-bearing particles were produced by the methods described below using the above components (A) and (B).

In a 100-mL plastic container, a predetermined amount of component (A) was weighed, a predetermined amount of ion-exchanged water was added, and stirring was carried out for 1 minute so that the whole became uniform to obtain mixture A. A predetermined amount of component (B) was added to mixture A, and this was left to stand for 30 seconds and thereafter stirred for 1 minute to obtain mixture B. Drying mixture B at 80°C for 3 minutes and removing and stirring it for 1 minute were performed 3 times in total to obtain a composition.

Note that the cellulose derivative-bearing particles of comparative examples 9 and 14 were produced by the method below.

Components (A) and (B) were mixed in solid form, and water was added in accordance with a table. After 1 minute of stirring, 1.0 g of the mixture was pressed into a tablet with a force of 20 MPa using a tablet press (MS05-100 manufactured by RIKEN SEIKI CO., LTD.), and the tablet was then crushed with a hammer to obtain a composition.

Tables 3 and 4 show the average particle sizes of components (A) and (B) and the formulation ratios therebetween and the use amounts of water used for production when the bearing particles used in the examples and comparative examples were produced.

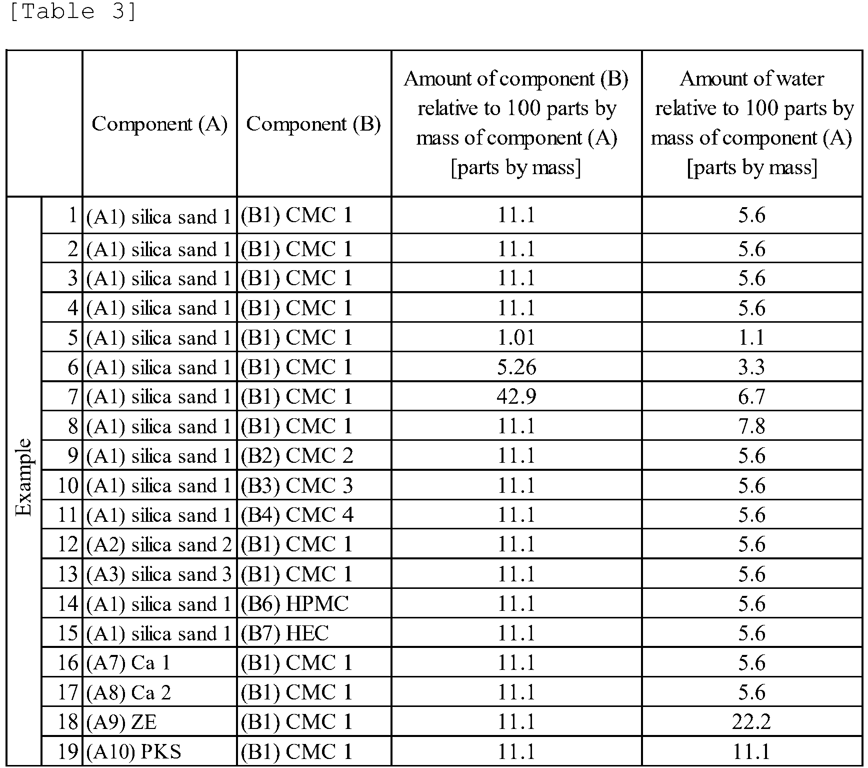

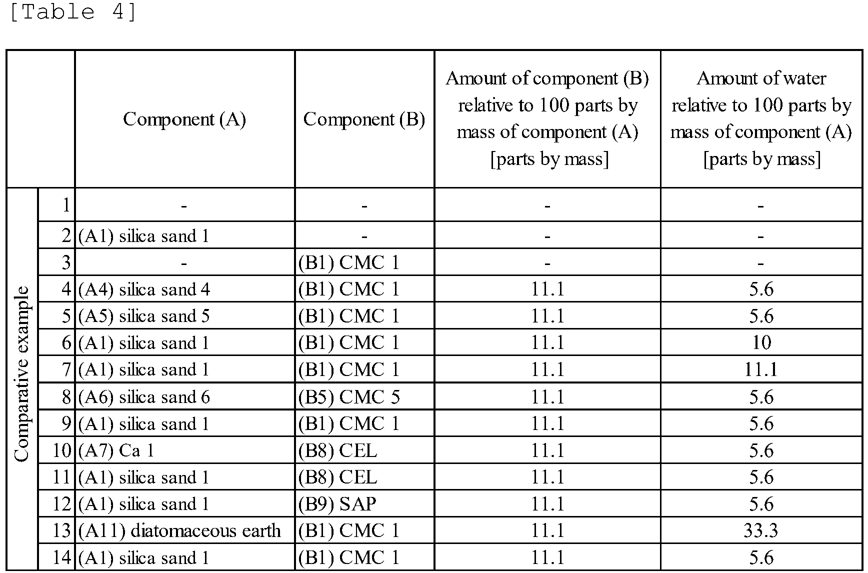

Table 5 shows the particle size distributions and average particle sizes of the compositions of the examples produced under the conditions in Table 3. Further, Table 6 shows the particle size distributions and average particle sizes of the bearing particles, the amounts of component (B) (parts by mass) relative to 100 parts by mass of component (A) of the bearing particles, and the average particle size ratios between the bearing particles and raw material component (A).

Note that, since all the used components (B) except for (B5) had a particle size of less than 100 µm as shown in Table 2, almost all the particles of less than 100 µm removed by sifting the compositions of the examples may be considered as component (B) not carried on the surface of component (A). In view of this, the amounts of component (B) (parts by mass) relative to 100 parts by mass of component (A) of the obtained bearing particles were calculated from [parts by mass of used component (B) - parts by mass of particles of less than 100 µm].

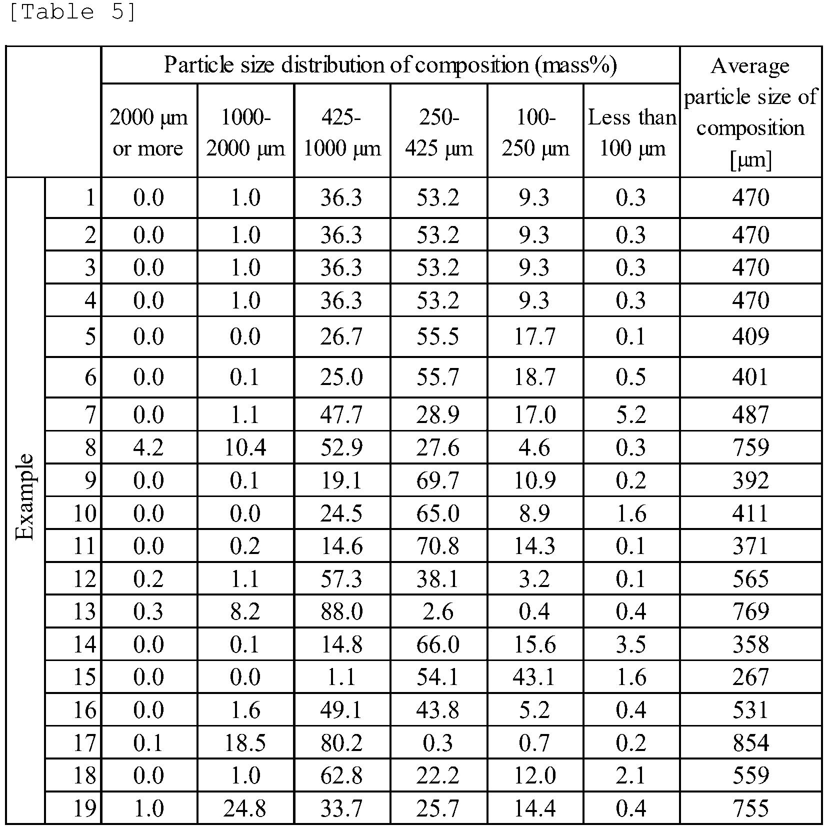

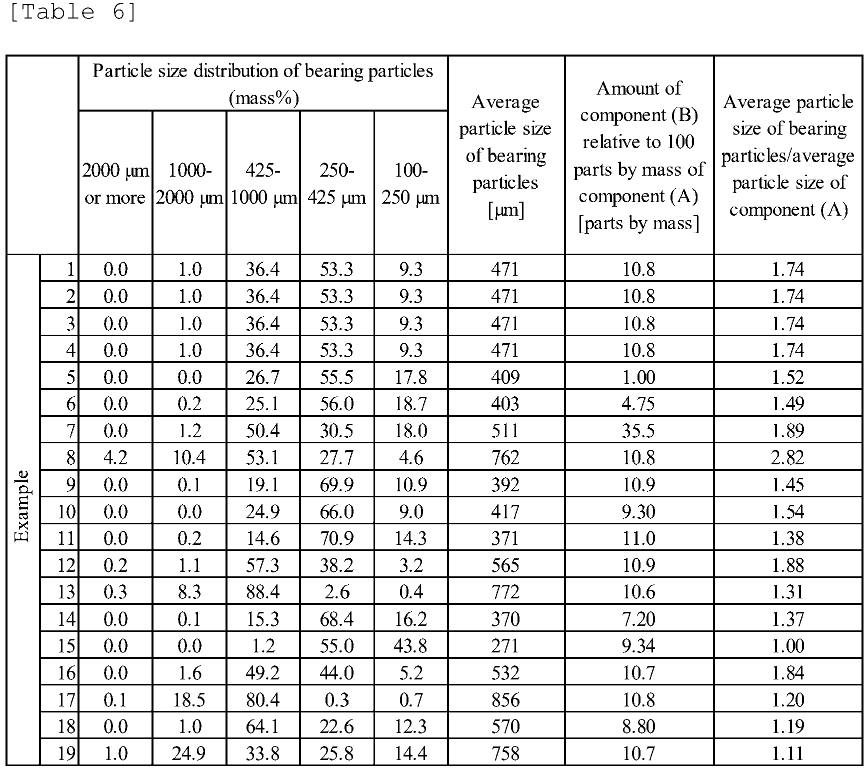

Table 7 shows the particle size distributions and average particle sizes of the compositions of the comparative examples produced under the conditions in Table 4. Further, Table 8 shows the particle size distributions and average particle sizes of the bearing particles of the comparative examples, the amounts of component (B) (parts by mass) relative to 100 parts by mass of component (A) of the bearing particles, and the average particle size ratios between the bearing particles and raw material component (A).

The amounts of component (B) (parts by mass) relative to 100 parts by mass of component (A) of the obtained bearing particles were determined in the same manner as in the examples.

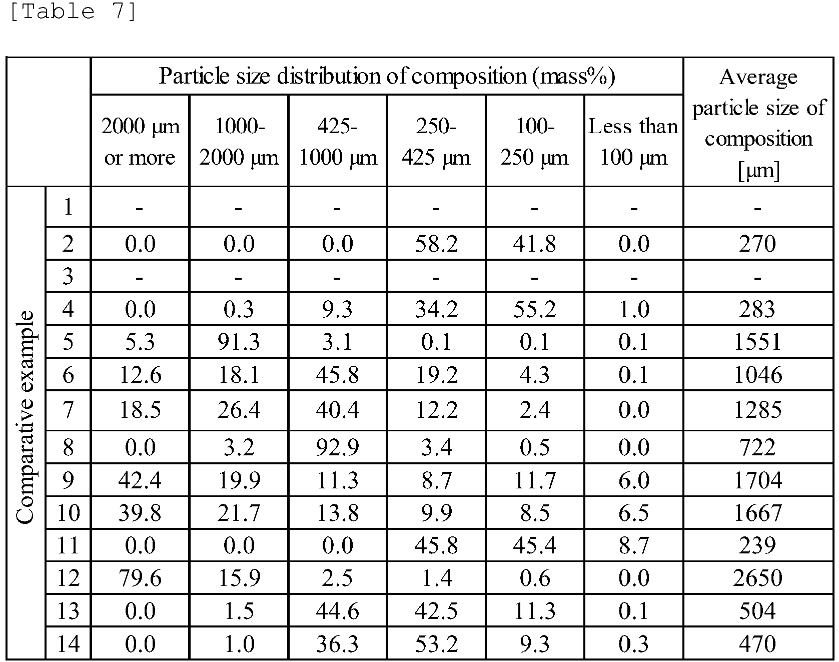

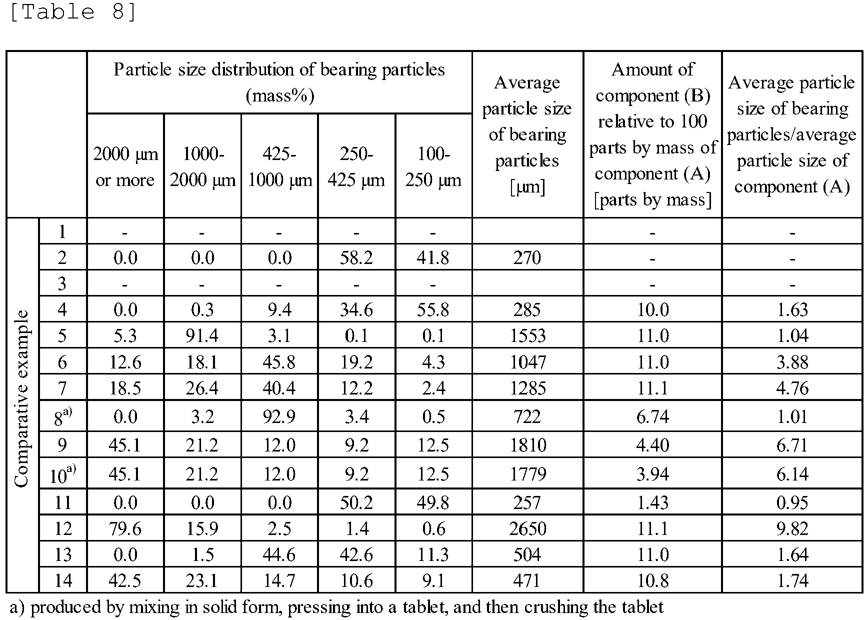

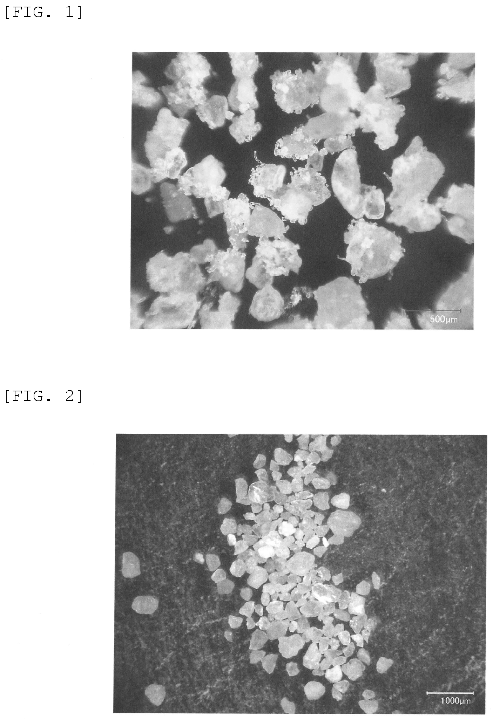

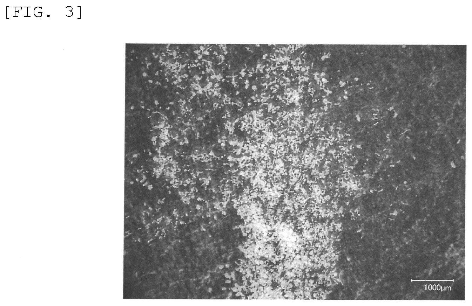

FIGS. 1, 2, and 3 show representative microscopic images of bearing particles produced using 9 g of silica sand 1 as component (A), 1 g of CMC 1 as component (B), and 0.5 g of water, component (A) alone, and component (B) alone, respectively (the images were taken by the digital microscope VHX-1000 manufactured by KEYENCE CORPORATION). It is clear from FIG. 1 that the method of the present application allows the silica sand particles of component (A) to bear the particles of a cellulose derivative on their surfaces. Further, it is clear from comparisons of FIGS. 2 and 3 to FIG. 1 that the particle size of each of components (A) and (B) hardly changes before and after the production of the bearing particles.

Next, drainage and scattering suppressibility tests using the obtained compositions are explained.

Drainage is measured by the method below.

### (1) Preparation of soil for drainage measurement

Arakida soil (manufactured by KOHNAN) is put through a sieve with a mesh size of 8 mm to obtain a sample passing through 8-mm sieve. The water content of this sample is adjusted to 21 mass%, and 80 g thereof is weighed in a 300-mL plastic container.

After that, a predetermined amount of each composition in Table 5 is sprinkled on the Arakida soil. After 3 minutes of rest, stirring is carried out 30 times using a spatula to obtain soil for measurement.

### (2) Drainage test on prepared soil for measurement

A piece of gauze is spread on the bottom of a 100-mL plastic container with a 1 cm diameter hole made in the bottom, and the soil for measurement prepared in (1) is all filled thereinto. 25 mL of water is sprinkled on the soil for measurement in imitation of a rainfall using Nakaya Shower Cap manufactured by NAKAYA KAGAKU SANGYO CO., Ltd., and the amount of water drained from the hole in the bottom is measured over time. With the drainage starting time as time 0, the slope given by (drainage amount) ÷ (time) is calculated from the measurements between 0 and 10 seconds. This operation is repeated 5 times, and the fifth slope S (g/s) is determined.

Likewise, soil with no composition added is filled into a 100-mL plastic container with a 1 cm diameter hole made in the bottom, and the same operation is repeated 5 times and the fifth slope B (g/s) is determined.

The drainage is calculated as (slope S ÷ slope B) × 100 using the obtained slopes. The larger this numerical value, the higher the drainage.

Scattering suppressibility is measured by the method below.

While wind at a wind speed of 2 m/s is blown in a range of 12 cm in a vertically upward direction from the ground, 4 to 5 g of the obtained bearing particles is dropped from a position at 15 cm in the vertically upward direction. After the particles are dropped, the wind is stopped, and the composition remaining within 20 cm from the drop position is collected and its mass is measured.

The scattering suppressibility is calculated as (mass of composition remaining within 20 cm ÷ mass of composition before dropping) × 100. The larger this numerical value, the higher the scattering suppressibility.

The drainage and scattering suppressibility were evaluated using the compositions of the examples in Table 5. The results are shown in Table 9.

Note that each soil improving agent composition was sprayed on the soil to be filled into the 100-mL plastic container so that the addition amount of the composition relative to the soil was a use amount in Table 9. For example, when the soil improving agent composition was added in an amount of 0.1 parts by mass relative to 100 parts by mass of the soil, 0.08 g of the soil improving agent composition was added relative to an area of 0.00196 m² of the soil surface. In this case, the addition amount of the soil improving agent composition per 1,000 m², i.e., 10 ares of the soil was 40.8 kg.

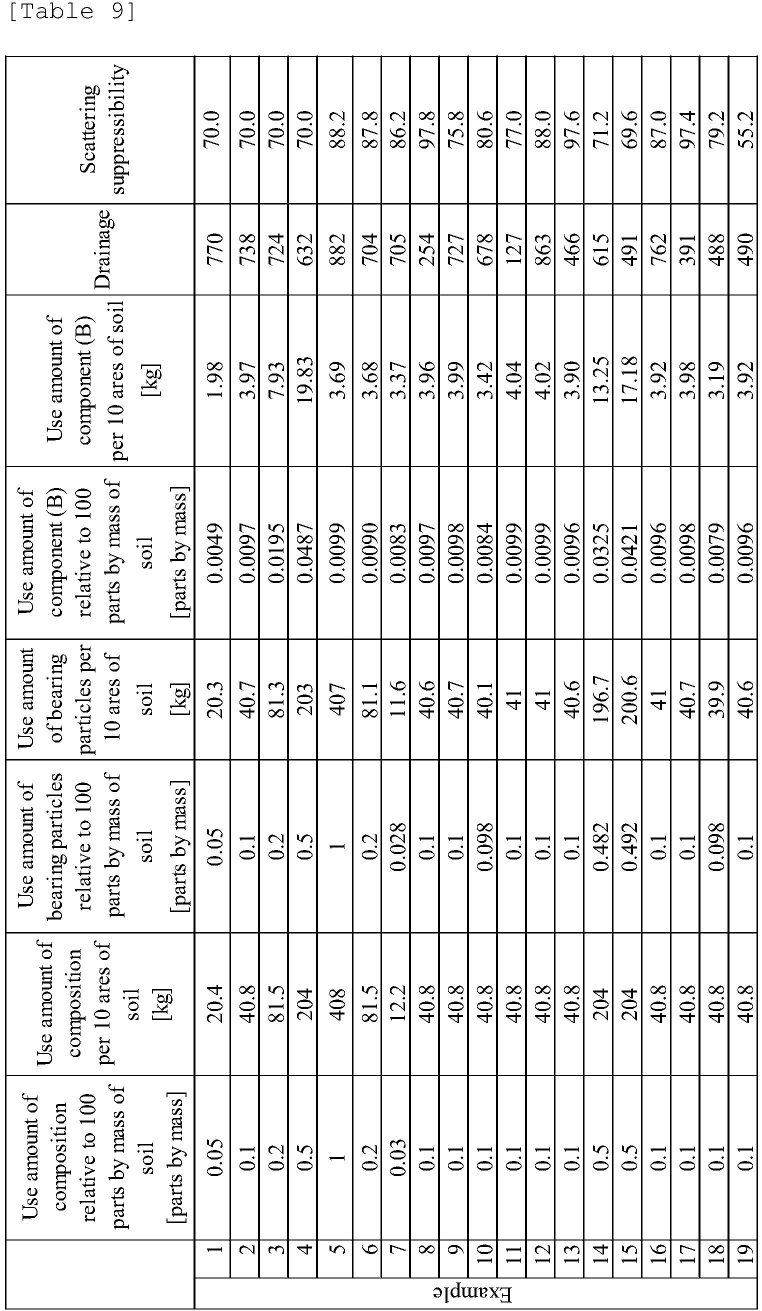

Table 9 shows that excellent drainage and scattering were achieved by using the compositions (of examples 1 to 13) containing the bearing particles in which silica sand bore CMC on its surface. Further, excellent drainage and scattering were also achieved by using the composition (of example 14 or 15) containing the bearing particles in which silica sand bore HPMC or HEC on its surface. Further, excellent drainage and scattering were also achieved by using the composition (of any of examples 16 to 19) containing the bearing particles in which calcium carbonate, zeolite, or PKS bore CMC on its surface.

Next, the drainage and scattering suppressibility were evaluated using the compositions of the comparative examples in Table 7. The results are shown in Table 10.

Note that the addition amount of each soil improving agent composition per 10 ares is a value calculated in the same manner as in Table 9.

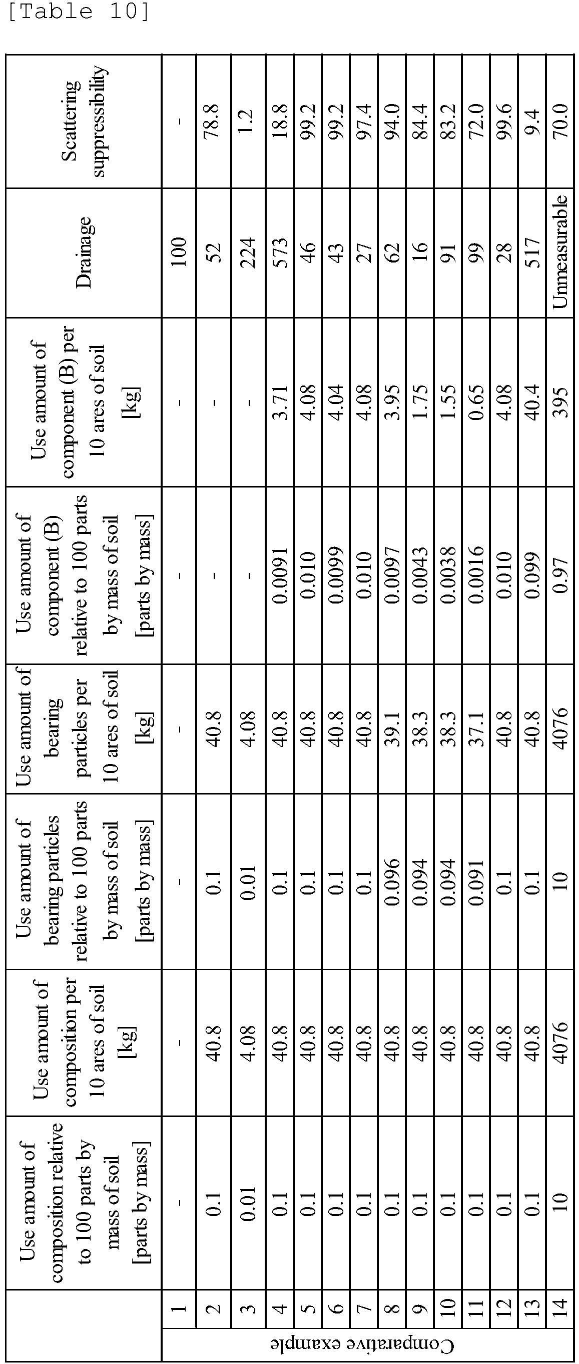

The following are clear from Table 10. Note that, in comparative example 1, the blank experiment for the drainage of the soil alone was conducted (drainage 100), and the scattering suppressibility was not evaluated.

The scattering suppressibility was excellent, but the drainage was extremely inferior when only silica sand 1 was used and component (B) was not added (comparative example 2). This reveals that component (B) is essential to the achievement of excellent drainage. Further, the drainage was slightly improved, but the scattering suppressibility was extremely inferior when the evaluations were conducted using only CMC 1 (comparative example 3). These results reveal that both components (A) and (B) are necessary to achieve the objectives of the present application.

Further, the scattering suppressibility was inferior when silica sand 4 with a small average particle size (175 µm) was used (comparative example 4), and the drainage was inferior when silica sand 5 with a large average particle size (1500 µm) was used (comparative example 5). Further, the scattering suppressibility was excellent, but the drainage was inferior when the ratio of average particle size of bearing particles/average particle size of (A) was large, in other words, agglomerated bearing particles were used (comparative examples 6 and 7).

Further, the drainage was also low when CMC 5 with an extremely large average particle size (500 µm) was used (comparative example 8).

When particles obtained by kneading silica sand 1 and CMC 1 exhibiting excellent drainage and scattering suppressibility, pressing the mixture into a tablet, and then crushing the tablet were used, the mass ratio of carried CMC 1 to silica sand 1 was extremely reduced (4.40%). Further, crushing led to a large average particle size and extremely reduced drainage (comparative example 9). Likewise, the drainage was also reduced when calcium carbonate 3 was used as a support (comparative example 10).

Excellent drainage was not obtained when cellulose powder with no hydroxyl groups substituted was used (comparative example 11). Further, excellent drainage was not obtained when SAP, a water-absorbing polymer, was used as component (B) (comparative example 12). Further, the scattering suppressibility was extremely reduced when diatomaceous earth with a bulk density about 20% of that of silica sand was used (comparative example 13).

Note that, when a large amount of bearing particles obtained from silica sand 1 and CMC 1 exhibiting excellent drainage and scattering suppressibility was added to the soil, clogging occurred, resulting in extremely reduced drainage (comparative example 14).

In addition to the embodiments described above, the present invention discloses the aspects below.

<1> A soil improving agent composition containing cellulose derivative-bearing particles in which water-insoluble particles (component (A)) bear particles of a cellulose derivative (component (B)) on their surface.
<2> The soil improving agent composition according to <1>, wherein the cellulose derivative-bearing particles have an average particle size of preferably 200 µm or more, more preferably 250 µm or more, and further preferably 300 µm or more, and preferably 1000 µm or less, more preferably 700 µm or less, and further preferably 600 µm or less.
<3> The soil improving agent composition according to <1> or <2>, wherein component (A) is at least one selected from palm kernel shells, zeolite, silica sand, and calcium carbonate.
<4> The soil improving agent composition according to any of <1> to <3>, wherein component (A) has an average particle size of preferably 180 µm or more, more preferably 200 µm or more, and further preferably 250 µm or more, and preferably 1000 µm or less, more preferably 650 µm or less, and further preferably 350 µm or less.
<5> The soil improving agent composition according to any of <1> to <3>, wherein component (A) has a bulk density of preferably 0.5 g/cm³ or more, more preferably 0.8 g/cm³ or more, and further preferably 1.0 g/cm³ or more, and preferably 1.5 g/cm³ or less, more preferably 1.4 g/cm³ or less, further preferably 1.35 g/cm³ or less, and furthermore preferably 1.3 g/cm³ or less.
<6> The soil improving agent composition according to any of <1> to <5>, wherein the cellulose derivative contained in component (B) is a derivative in which part or all of the hydrogens in the hydroxyl groups of cellulose have been substituted.
<7> The soil improving agent composition according to any of <1> to <6>, wherein the cellulose derivative contained in component (B) is at least one selected from
   (B-1) a carboxyalkyl cellulose or a salt thereof,
   (B-2) a (carboxyalkyl) alkyl cellulose or a salt thereof,
   (B-3) an alkyl cellulose,
   (B-4) a hydroxyalkyl cellulose, and
   (B-5) an (alkyl) hydroxyalkyl cellulose.
<8> The soil improving agent composition according to any of <1> to <6>, wherein the cellulose derivative contained in component (B) is at least one selected from
   (B-1) a carboxyalkyl cellulose or a salt thereof in which part or all of the hydrogens in the hydroxyl groups of cellulose have been substituted by a carboxyalkyl group, preferably a carboxyalkyl cellulose or a salt thereof (here, the salt is a sodium salt, a potassium salt, a calcium salt, an ammonium salt, or the like) having a group in which a carboxy group is bonded to an alkyl group with 1 or more and 4 or less carbons, such as carboxymethyl cellulose or a salt thereof, carboxyethyl cellulose or a salt thereof, or the like (hereinafter referred to as component (B-1)),
   (B-2) a (carboxyalkyl) alkyl cellulose or a salt thereof in which part or all of the hydrogens in the hydroxyl groups of cellulose have been substituted by a carboxyalkyl group and an alkyl group, preferably a (carboxyalkyl) alkyl cellulose or a salt thereof (here, the salt is a sodium salt, a potassium salt, a calcium salt, an ammonium salt, or the like) having a group in which a carboxy group is bonded to an alkyl group with 1 or more and 4 or less carbons, and an alkyl group with 1 or more and 4 or less carbons, such as (carboxymethyl) methyl cellulose or a salt thereof, (carboxymethyl) ethyl cellulose or a salt thereof, or the like (hereinafter referred to as component (B-2)),
   (B-3) an alkyl cellulose in which part or all of the hydrogens in the hydroxyl groups of cellulose have been substituted by an alkyl group, specifically an alkyl cellulose having an alkyl group with 1 or more and 4 or less carbons, such as methyl cellulose, ethyl cellulose, or the like (hereinafter referred to as component (B-3)),
   (B-4) a hydroxyalkyl cellulose in which part or all of the hydrogens in the hydroxyl groups of cellulose have been substituted by a hydroxyalkyl group, preferably a hydroxyalkyl cellulose having a hydroxyalkyl group with 2 or more and 4 or less carbons, such as hydroxyethyl cellulose, hydroxypropyl cellulose, or the like (hereinafter referred to as component (B-4)), and
   (B-5) an (alkyl) hydroxyalkyl cellulose in which part or all of the hydrogens in the hydroxyl groups of cellulose have been substituted by an alkyl group and a hydroxyalkyl group, specifically an (alkyl) hydroxyalkyl cellulose having an alkyl group with 1 or more and 4 or less carbons and a hydroxyalkyl group with 2 or more and 4 or less carbons, such as (hydroxyethyl) methyl cellulose, (hydroxyethyl) ethyl cellulose, (hydroxypropyl) methyl cellulose, (hydroxypropyl) ethyl cellulose, or the like (hereinafter referred to as component (B-5)).
<9> The soil improving agent composition according to <8>, wherein the cellulose derivative contained in component (B) is at least one selected from (B-1), (B-4), and (B-5).
<10> The soil improving agent composition according to <8> or <9>, wherein the carboxyalkyl cellulose or salt thereof of (B-1) is preferably carboxymethyl cellulose or a salt thereof.
<11> The soil improving agent composition according to <8> or <9>, wherein the carboxy group of the carboxyalkyl cellulose or salt thereof of (B-1) is an alkali metal salt such as a sodium salt, a potassium salt, or the like, an alkaline earth metal salt such as a magnesium salt, a calcium salt, or the like, or an ammonium ion salt, preferably an alkali metal salt, and more preferably a sodium salt.
<12> The soil improving agent composition according to any of <1> to <11>, wherein the particles of the cellulose derivative contained in component (B) have an average particle size of preferably 200 µm or less and more preferably 100 µm or less.
<13> The soil improving agent composition according to <12>, wherein the particles of the cellulose derivative contained in component (B) have an average particle size of preferably 10 µm or more and more preferably 20 µm or more, and preferably 200 µm or less and more preferably 100 µm or less.
<14> The soil improving agent composition according to any of <1> to <13>, wherein a degree of substitution of hydrogen in the hydroxyl groups of the cellulose derivative contained in component (B) is preferably 0.3 or more, more preferably 0.6 or more, and further preferably 1.0 or more, and preferably 1.8 or less and more preferably 1.6 or less.
<15> The soil improving agent composition according to any of <1> to <14>, wherein a 1% aqueous solution of the cellulose derivative contained in component (B) has a viscosity of preferably 5 mPa·s or more, more preferably 15 mPa·s or more, and further preferably 100 mPa·s or more, and preferably 5000 mPa·s or less, more preferably 4000 mPa·s or less, and further preferably 3500 mPa·s or less at 25°C.
<16> The soil improving agent composition according to any of <1> to <15>, wherein an amount of component (B) in the cellulose derivative-bearing particles is preferably 1 part by mass or more, more preferably 3 parts by mass or more, and further preferably 10 parts by mass or more, and preferably 100 parts by mass or less, more preferably 70 parts by mass or less, and further preferably 50 parts by mass or less relative to 100 parts by mass of component (A).
<17> The soil improving agent composition according to any of <1> to <16>, wherein a content of the particles of component (B) in the cellulose derivative-bearing particles is preferably 70 mass% or more and more preferably 90 mass% or more, and 100 mass% or less.
<18> The soil improving agent composition according to any of <1> to <17>, wherein [average particle size of cellulose derivative-bearing particles]/[average particle size of component (A)] is 3.0 or less.
<19> The soil improving agent composition according to <18>, wherein [average particle size of cellulose derivative-bearing particles]/[average particle size of component (A)] is 2.5 or less.
<20> The soil improving agent composition according to <18>, wherein [average particle size of cellulose derivative-bearing particles]/[average particle size of component (A)] is 1.0 or more, more preferably 1.3 or more, and further preferably 1.4 or more, and preferably 3.0 or less and more preferably 2.5 or less.
<21> The soil improving agent composition according to any of <1> to <20>,
   wherein component (A) is at least one selected from palm kernel shells, zeolite, silica sand, and calcium carbonate, and
   component (B) is at least one selected from (B-1) a carboxyalkyl cellulose or a salt thereof, (B-4) a hydroxyalkyl cellulose, and (B-5) an (alkyl) hydroxyalkyl cellulose.
<22> The soil improving agent composition according to any of <1> to <21>, wherein component (A) is at least one selected from palm kernel shells, zeolite, silica sand, and calcium carbonate,
   component (B) is at least one selected from (B-1) a carboxyalkyl cellulose or a salt thereof, (B-4) a hydroxyalkyl cellulose, and (B-5) an (alkyl) hydroxyalkyl cellulose, and
   [average particle size of cellulose derivative-bearing particles]/[average particle size of component (A)] is 3.0 or less and preferably 2.5 or less.
<23> A method for producing the soil improving agent composition according to any of <1> to <22>, whereby the composition containing the bearing particles in which component (A) bears component (B) on its surface is obtained from components (A) and (B), wherein the method is a method selected from a kneading method, an impregnation supporting method, or an incipient wetness method, and preferably a kneading method carried out in the presence of water.
<24> The method for producing the soil improving agent composition according to <23>, wherein the kneading method carried out in the presence of water includes the following steps,
   (step 1) a step of mixing component (A) and water to obtain the water-insoluble particles with water adhering to their surface,
   (step 2) a step of adding component (B) to the water-insoluble particles with water adhering to their surface obtained in step 1 and mixing, and
   (step 3) a step of drying, while stirring as necessary, a water-containing mixture obtained in step 2 to obtain a mixture containing the bearing particles in which component (A) bears component (B) on its surface.
<25> The method for producing the soil improving agent composition according to <24> further including the following step,
   (step 4) a step of stirring the mixture obtained in step 3 to break up agglomerates of the bearing particles into smaller sizes.
<26> A method for improving soil including spraying the soil improving agent composition according to any of <1> to <22> in an amount of preferably 0.4 kg or more and more preferably 2 kg or more, and preferably 4,000 kg or less, more preferably 2,000 kg or less, further preferably 1,000 kg or less, furthermore preferably 800 kg or less, furthermore preferably 400 kg or less, and furthermore preferably 120 kg or less in terms of an amount of the cellulose derivative-bearing particles relative to 10 ares of the soil.
<27> A method for improving soil including adding the soil improving agent composition according to any of <1> to <22> in an amount of preferably 0.04 kg or more and more preferably 1.6 kg or more, and preferably 390 kg or less, more preferably 200 kg or less, further preferably 20 kg or less, and furthermore preferably 12 kg or less in terms of an amount of the cellulose derivative relative to 10 ares of the soil.
<28> A method for improving soil including adding the soil improving agent composition according to any of <1> to <22> in an amount of preferably 0.001 parts by mass or more and more preferably 0.005 parts by mass or more, and preferably less than 10 parts by mass, more preferably 5 parts by mass or less, further preferably 2.5 parts by mass or less, furthermore preferably 2.0 parts by mass or less, furthermore preferably 1.0 parts by mass or less, and furthermore preferably 0.3 parts by mass or less per 100 parts by mass of the soil.
<29> A method for improving soil including adding the soil improving agent composition according to any of <1> to <22> in an amount of preferably 0.0001 parts by mass or more and more preferably 0.0004 parts by mass or more, and preferably 0.95 parts by mass or less, more preferably 0.5 parts by mass or less, further preferably 0.05 parts by mass or less, and furthermore preferably 0.03 parts by mass or less per 100 parts by mass of the soil as the cellulose derivative of component (B).

## Claims

1. A soil improving agent composition comprising cellulose derivative-bearing particles in which water-insoluble particles (component (A)) bear particles of a cellulose derivative (component (B)) on their surface.

2. The soil improving agent composition according to claim 1, wherein the cellulose derivative-bearing particles have an average particle size of 200 µm or more and 1000 µm or less.

3. The soil improving agent composition according to claim 1, wherein the cellulose derivative is at least one selected from
(B-1) a carboxyalkyl cellulose or a salt thereof,
(B-2) a (carboxyalkyl) alkyl cellulose or a salt thereof,
(B-3) an alkyl cellulose,
(B-4) a hydroxyalkyl cellulose, and
(B-5) an (alkyl) hydroxyalkyl cellulose.

4. The soil improving agent composition according to any of claims 1 to 3, wherein the particles of a cellulose derivative have an average particle size of 200 µm or less.

5. The soil improving agent composition according to any of claims 1 to 3, wherein [average particle size of cellulose derivative-bearing particles]/[average particle size of component (A)] is 3.0 or less.

6. The soil improving agent composition according to claim 5, wherein [average particle size of cellulose derivative-bearing particles]/[average particle size of component (A)] is 2.5 or less.

7. The soil improving agent composition according to any of claims 1 to 3, wherein a degree of substitution of hydrogen in the hydroxyl groups of the cellulose derivative contained in the component (B) is 0.3 or more.

8. The soil improving agent composition according to claim 1, wherein an amount of the component (B) in the cellulose derivative-bearing particles is 1 to 100 parts by mass relative to 100 parts by mass of the component (A).

9. The soil improving agent composition according to claim 1, wherein the component (A) is at least one selected from palm kernel shells, silica sand, calcium carbonate, and zeolite.

10. The soil improving agent composition according to claim 1, wherein the component (B) is at least one selected from
(B-1) a carboxyalkyl cellulose or a salt thereof, (B-4) a hydroxyalkyl cellulose, and (B-5) an (alkyl) hydroxyalkyl cellulose.

11. The soil improving agent composition according to claim 1, wherein the component (A) is at least one selected from palm kernel shells, silica sand, calcium carbonate, and zeolite, and
the component (B) is at least one selected from
(B-1) a carboxyalkyl cellulose or a salt thereof, (B-4) a hydroxyalkyl cellulose, and (B-5) an (alkyl) hydroxyalkyl cellulose.

12. The soil improving agent composition according to claim 1 comprising the cellulose derivative-bearing particles in which the component (A) bears the component (B) on its surface, wherein [average particle size of cellulose derivative-bearing particles]/[average particle size of component (A)] is 3.0 or less,
wherein the component (A) is at least one selected from palm kernel shells, silica sand, calcium carbonate, and zeolite, and
the component (B) is at least one selected from
(B-1) a carboxyalkyl cellulose or a salt thereof, (B-4) a hydroxyalkyl cellulose, and (B-5) an (alkyl) hydroxyalkyl cellulose.

13. A method for producing a soil improving agent composition comprising cellulose derivative-bearing particles in which water-insoluble particles (component (A)) bear particles of a cellulose derivative (component (B)) on their surface, the method comprising the following steps,
(step 1) a step of mixing the water-insoluble particles (component (A)) and water to obtain the water-insoluble particles with water adhering to their surface,
(step 2) a step of adding the particles of a cellulose derivative (component (B)) to the water-insoluble particles with water adhering to their surface obtained in the step 1 and mixing, and
(step 3) a step of drying, while stirring as necessary, a water-containing mixture obtained in the step 2 to obtain the composition containing the bearing particles in which the water-insoluble particles (component (A)) bear the particles of a cellulose derivative (component (B)) on their surface.

14. A method for improving soil comprising spraying a soil improving agent composition comprising cellulose derivative-bearing particles containing water-insoluble particles (component (A)) and particles of a cellulose derivative (component (B)) carried on the surface of the component (A), wherein the composition is sprayed in an amount of 0.4 kg or more and 4,000 kg or less in terms of an amount of the cellulose derivative-bearing particles relative to 10 ares of the soil.

15. A method for improving soil comprising spraying particles of a cellulose derivative (component (B)) contained in a soil improving agent composition comprising cellulose derivative-bearing particles, wherein the component (B) is sprayed in an amount of 0.04 kg or more and 390 kg or less in terms of an amount of the cellulose derivative relative to 10 ares of the soil.

16. A method for producing improved soil comprising spraying a soil improving agent composition comprising cellulose derivative-bearing particles containing water-insoluble particles (component (A)) and particles of a cellulose derivative (component (B)) carried on the surface of the component (A), wherein the composition is sprayed in an amount of 0.4 kg or more and 4,000 kg or less in terms of an amount of the cellulose derivative-bearing particles relative to 10 ares of the soil.
